# EUROPEAN PATENT SPECIFICATION

(11) **EP 1 928 081 B1**
(45) Date of publication and mention of the grant of the patent: **30.12.2020**
(21) Application number: 07023087.5
(22) Date of filing: 28.11.2007
(51) Int. Cl.: H02M 5/42, H02J 9/06

(54) **Power supply apparatus, methods and computer program products using D-Q domain based synchronization techniques**
Netzteil, Verfahren und Computerprogramm unter Verwendung von D-Q-Domänen-basierten Synchronisationstechniken
Alimentation en courant électrique, procédés et produits de programme informatiques utilisant des techniques de synchronisation à base de domaine D-Q

(30) Priority: 30.11.2006 US 565119
(43) Date of publication of application: 04.06.2008
(73) Proprietor: Eaton Intelligent Power Limited, Dublin 4 (IE)
(72) Inventor: Taimela, Pasi S., Raleigh NC 27616 (US); Van Eyll, Kevin L., Angier NC 27501 (US); Lee, Kevin, Milwaukee WI 53051 (US)
(74) Representative: BRP Renaud & Partner mbB Rechtsanwälte Patentanwälte Steuerberater

(56) References cited:
- US-B1- 6 295 215
- SE-KYO CHUNG: "A Phase Tracking System for Three Phase Utility Interface Inverters", IEEE TRANSACTIONS ON POWER ELECTRONICS, INSTITUTE OF ELECTRICAL AND ELECTRONICS ENGINEERS, USA, vol. 15, no. 3, 1 May 2000 (2000-05-01), XP011043429, ISSN: 0885-8993
- F. BLAABJERG ET AL: "Overview of Control and Grid Synchronization for Distributed Power Generation Systems", IEEE TRANSACTIONS ON INDUSTRIAL ELECTRONICS, vol. 53, no. 5, 2 October 2006 (2006-10-02), pages 1398-1409, XP055160782, ISSN: 0278-0046, DOI: 10.1109/TIE.2006.881997
- TIMBUS A ET AL: "Synchronization methods for three phase distributed power generation systems - An overview and evaluation", POWER ELECTRONICS SPECIALISTS CONFERENCE, 2005. PESC '05. IEEE 36TH, IEEE, PISCATAWAY, NJ, USA, 16 June 2005 (2005-06-16), pages 2474-2481, XP032272519, DOI: 10.1109/PESC.2005.1581980 ISBN: 978-0-7803-9033-1

## Description

### BACKGROUND OF THE INVENTION

The invention relates to power supplies, and more particularly, to AC power supply apparatus and methods and computer program products for operating the same.

In some power supply applications, such as in uninterruptible power supply (UPS) applications, it may be desirable to synchronize the output of a UPS to an AC waveform reference. For example, in some UPS applications, it may be desirable to synchronize an output inverter of a UPS to a bypass source, such as a utility source or generator, or to a reference AC waveform signal. U.S. Patent No. 5,745,355 to Tassitino, Jr. et al. and U.S. Patent No. 6,549,440 to Tassitino, Jr. et al. describe various techniques for achieving such synchronization in on-line UPS configurations.

Attention is drawn to Se-Kyo Chung: "A Phase Tracking System for Three Phase Utility Interface Inverters", vol. 15, no. 3, 1 May 2000, which shows the analysis and design of the phase-locked loop (PLL) system, which is presented for the phase tracking system of the three phase utility interface inverters. The dynamic behaviour of the closed loop PLL system is investigated in both continuous and discrete-time domains, and the optimization method is considered for the second order PLL system.

Further, F. Blaabjerg et al.: "Overview of Control and Grid Synchronization for Distributed Power Generation Systems", vol. 53, no. 5, 2 October 2006, p. 1398-1409, gives an overview of the structures for the distributed power generation system (DPGS) based on fuel cell, photovoltaic, and wind turbines. In addition, control structures of the grid-side converter are presented, and the possibility of compensation for low-order harmonics is also discussed. Moreover, control strategies when running on grid faults are treated.

### SUMMARY OF THE INVENTION

In accordance with the present invention, a method as set forth in claim 1 is provided. Further embodiments are inter alia disclosed in the dependent claims. Some embodiments of the present invention provide methods of operating a power supply apparatus, such as an inverter of a UPS. A value of an AC reference waveform, such as an AC input voltage from a utility or other AC source, is obtained and converted to a d-q reference frame value. A phase estimate is generated responsive to the d-q reference frame value. An AC output of the power supply apparatus is controlled responsive to an output current of the power supply apparatus and the phase estimate. For example, an output current value may be obtained and converted to a d-q reference frame-current value responsive to the phase estimate, and the AC output may be controlled responsive to the d-q reference frame current value.

In further embodiments, generating a phase estimate responsive to the d-q reference frame value may include generating an angle estimate responsive to the d-q reference frame value and converting the output current value to a d-q reference frame current value responsive to the phase estimate may include converting the output current value to the d-q reference frame current value responsive to the angle estimate. Controlling the AC output responsive to the d-q reference frame current value includes generating an AC output voltage waveform reference signal responsive to the d-q reference frame current value, detecting an AC output voltage of the UPS, comparing the AC output voltage waveform reference signal to the detected AC output voltage, and controlling the AC output current responsive to the comparison of the AC output voltage waveform reference signal and the detected AC output voltage.

In some embodiments, obtaining a value of an AC reference waveform may include obtaining a first value of the AC reference waveform. Converting the value to a d-q reference frame value may include converting the first value of the AC reference waveform to a first d-q component value. Generating a phase estimate responsive to the d-q reference frame value may include generating a first phase estimate responsive to a comparison of the first d-q component value to a reference d-q component value. Obtaining a value of an AC reference waveform may further include obtaining a second value of the AC reference waveform. Converting the value to a d-q reference frame value may further include converting the second value of the AC reference waveform to a second d-q component value according to the first phase estimate. Generating a phase estimate responsive to the d-q reference frame value may further include generating a second phase estimate responsive to a comparison of the second d-q component value to the reference d-q component value. The first and second d-q component values may include respective first and second quadrature component values and the reference d-q component value may include a reference quadrature component value.

In further embodiments, controlling an AC output of the power supply apparatus responsive to an output current of the power supply apparatus and the phase estimate includes controlling an output inverter of a UPS. The AC reference waveform may include an AC voltage of an AC source. A DC voltage may be generated from the AC source using a passive rectifier. Controlling an AC output of the power supply apparatus responsive to an output current of the power supply apparatus and the phase estimate may include generating the AC output from the DC voltage responsive to the output current of the power supply apparatus and the phase estimate.

In further embodiments of the present invention, a power supply apparatus includes a phase estimator circuit configured to convert a value of an AC reference waveform to a d-q reference frame value and to generate a phase estimate responsive to the d-q reference frame value and an AC voltage generator circuit configured to generate an AC output at an output thereof responsive to an output current and the phase estimate. The AC voltage generator circuit may be configured to obtain an output current value, to convert the output current value to a d-q reference frame current value responsive to the phase estimate and to generate the AC output responsive to the d-q reference frame current value.

According to further embodiments of the present invention, a UPS includes an inverter having an output configured to be coupled to a load, and a control circuit configured to convert a value of an AC reference waveform to a d-q reference frame value, to generate a phase estimate responsive to the d-q reference frame value and to cause the inverter to generate an AC output at the output of the inverter responsive to an output current and the phase estimate. The control circuit may be configured to obtain an output current value, to convert the output current value to a d-q reference frame current value responsive to the phase estimate and to cause the inverter to generate the AC output responsive to the d-q reference frame current value.

### BRIEF DESCRIPTION OF THE DRAWINGS

FIG. 1 is a schematic diagram illustrating an AC power supply apparatus and operations thereof according to some embodiments of the invention.
FIG. 2 is a schematic diagram illustrating a UPS and operations thereof according to further embodiments of the invention.
FIG. 3 is a schematic diagram illustrating an inverter circuit that may be used in some embodiments of the present invention.
FIG. 4 is a schematic diagram illustrating a d-q domain controller for an inverter circuit, such as the inverter circuit of FIG. 3, according to further embodiments of the invention.
FIG. 5 is a schematic diagram illustrating an exemplary implementation of a d-q controller according to some embodiments of the invention.
FIG. 6 illustrates a parallel application of UPSs according to some embodiments of the present invention.

### DETAILED DESCRIPTION OF EXEMPLARY EMBODIMENTS

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements. It will be understood that when an element is referred to as being "connected" or "coupled" to another element, it can be directly connected or coupled to the other element or intervening elements may be present. As used herein the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and the relevant art and will not be interpreted in an idealized or overly formal sense unless expressly so defined herein.

As will be appreciated by one of skill in the art, the invention may be embodied as apparatus, methods and computer program products. Embodiments of the invention may include hardware and/or software. Furthermore, the invention may take the form of a computer program product on a computer-usable storage medium having computer-usable program code embodied in the medium. Any suitable computer readable medium may be utilized including a hard disk, CD-ROM, optical storage device, magnetic storage device or a transmission medium.

Embodiments of the invention include circuitry configured to provide functions described herein. It will be appreciated that such circuitry may include analog circuits, digital circuits, and combinations of analog and digital circuits.

The invention is described below with reference to block diagrams and/or operational illustrations of methods, apparatus and computer program products according to various embodiments of the invention. It will be understood that each block of the block diagrams and/or operational illustrations, and combinations of blocks in the block diagrams and/or operational illustrations, can be implemented by analog and/or digital hardware, and/or computer program instructions. These computer program instructions may be provided to a processor of a general purpose computer, special purpose computer, ASIC, and/or other programmable data processing apparatus, such that the instructions, which execute via the processor of the computer and/or other programmable data processing apparatus, create means for implementing the functions/acts specified in the block diagrams and/or operational illustrations. In some alternate implementations, the functions/acts noted in the figures may occur out of the order noted in the block diagrams and/or operational illustrations. For example, two operations shown as occurring in succession may, in fact, be executed substantially concurrently or the operations may sometimes be executed in the reverse order, depending upon the functionality/acts involved.

Some embodiments of the invention arise from a realization that improved synchronization of a power supply apparatus, such as the output inverter of a UPS, to an AC reference waveform, such as a waveform of a utility, generator or other AC source, may be achieved by utilizing d-q domain techniques to generate a waveform reference that is used for AC output control. Such techniques, in contrast to conventional zero-crossing techniques, may enable estimation of the timing of the AC waveform at a rate substantially greater than the fundamental frequency of the waveform. This may, for example, enable the AC output control circuitry to more closely track AC sources, such as generators, that may exhibit relatively high rates of frequency/phase variation. Such techniques also may be less susceptible to detection noise effects, such as those exhibited in some zero-crossing based techniques. In further embodiments of the present invention, such control architectures may be advantageous employed in paralleled online UPS applications, and may provide desirable load sharing and transient performance even when the AC output waveform is distorted.

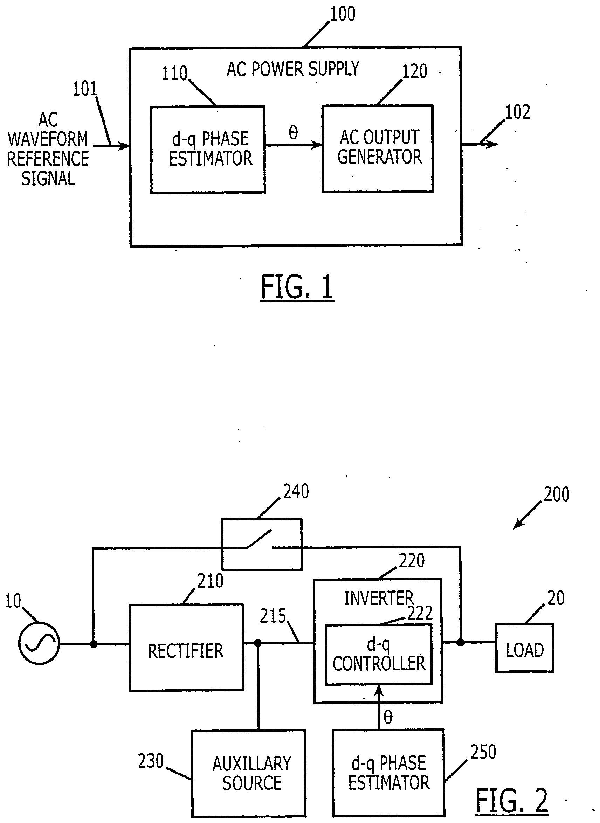

FIG. 1 illustrates a power supply apparatus 100 and operations thereof according to some embodiments of the present invention. The power supply apparatus, which may be, for example, a UPS, includes a d-q phase estimator circuit 110, which is configured to estimate a phase angle *θ* for an AC reference waveform 101. The phase angle *θ* is provided to an AC output generator circuit 120, which produces an AC output 102 responsive to the determined phase angle *θ*. For example, in some embodiments, such as UPS applications, the AC reference waveform 101 may be a voltage waveform of an AC source to which the UPS desires to synchronize for purposes, for example, of load transfer, interactive operation, or the like.

FIG. 2 illustrates an example of a UPS application according to some embodiments of the present invention. A UPS 200 includes a rectifier 210 that is configured to receive power from an AC source 10, such as a utility line or generator. The rectifier produces a DC voltage on a DC bus 215 from the AC voltage produced by the AC source 10. The DC bus 215 may also be powered by an auxiliary source 230, e.g., a battery, fuel cell or other power source. An inverter 220 is coupled to the DC bus 215, and generates an AC output to power a load 20. A bypass circuit 240 is configured to bypass the rectifier 210 and inverter 220 to provide AC power to the load 20 directly from the AC source 10 in certain modes of operation. For example, in some embodiments of the present invention, the bypass path may be used when the rectifier 210 and/or inverter 220 fails and/or may be used to provide a "high efficiency" mode of operation wherein the load is powered by the AC source 10 while the rectifier 210 and/or inverter 220 are used to provide power conditioning, e.g., power factor control, harmonic suppression and the like.

In such operations, it may be desirable to synchronize the operation of the inverter 220 with the AC source 10. For example, when operating on-line, i.e., with the rectifier 210 and inverter 210 supplying power to the load, it may be desirable to achieve synchronism of the inverter 220 with the AC source 10 to allow a relatively smooth waveform transition when changing to bypass operation. Similarly, when operating on bypass, it may be desirable to maintain synchronization of the waveform reference used for the inverter 220 with the AC source 10 such that, should the AC source 10 fail, a relatively smooth waveform transition may occur when changing to on-line operation.

According to some embodiments of the present invention illustrated in FIG. 2, the UPS 200 may include a d-q domain phase estimator 250 that generates phase estimates for the waveform of the AC source 10. The inverter 220 may include a d-q domain controller 222 that controls the inverter 220 responsive to the phase estimates. More particularly, the phase estimator 250 may generate phase estimates at a rate substantially higher than a fundamental frequency (e.g., 60 Hz) of the AC source waveform. This may enable the inverter 220 to provide relatively high performance in responding to variation in the AC source waveform. Such techniques may also provide more accurate control of the inverter 220 when the output thereof is subject to distortion, such as when the DC voltage on the DC bus 215 is low and causes the inverter 220 to clip the waveform of the AC output. Such improved control may, for example, facilitate improved load sharing when the UPS 200 is paralleled with a plurality of similar UPSs.

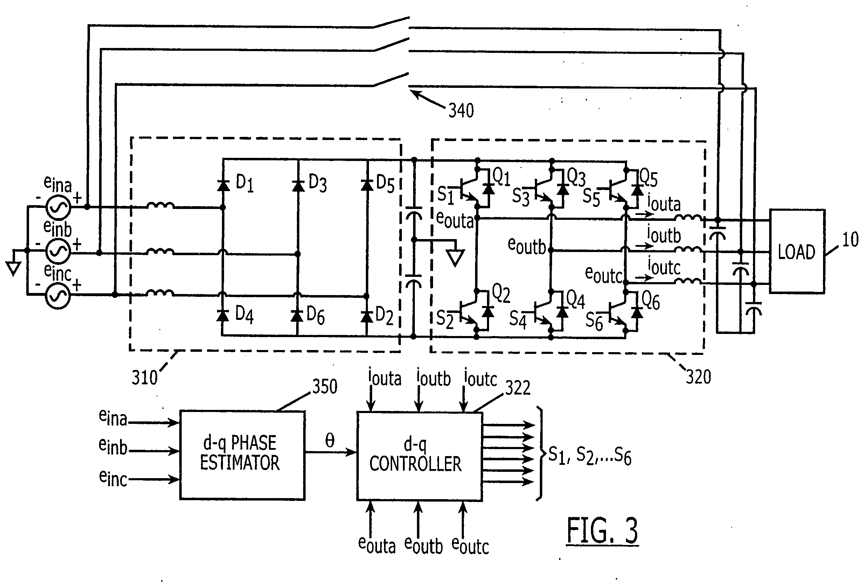

FIG. 3 illustrates in greater detail how such d-q based synchronization and control may be implemented in a typical UPS according to further embodiments of the present invention. Portions of a UPS include an input rectifier circuit 310, an inverter 320 coupled thereto, and a bypass circuit 340 that is configured to bypass the rectifier 310 and the inverter 320. Three-phase voltages *eᵢₙₐ, e_{inb}, e_{inc}* are applied to the rectifier 310, which responsively produces a DC input for the inverter 320. As shown, a d-q phase estimator 350 estimates a desired angle *θ* for the inverter 320 responsive to the three-phase voltages *eᵢₙₐ, e_{inb}, e_{inc}.* In particular, responsive to the determined angle *θ*, inverter output voltages *eₒᵤₜₐ, e_{outb}, e_{outc}* and output currents *iₒᵤₜₐ, i_{outb}, i_{outc},* a d-q controller 322 generates drive signals S₁, S2, ... , S6 that drive bridge transistors Q1, Q2, ... , Q6 of the inverter 320.

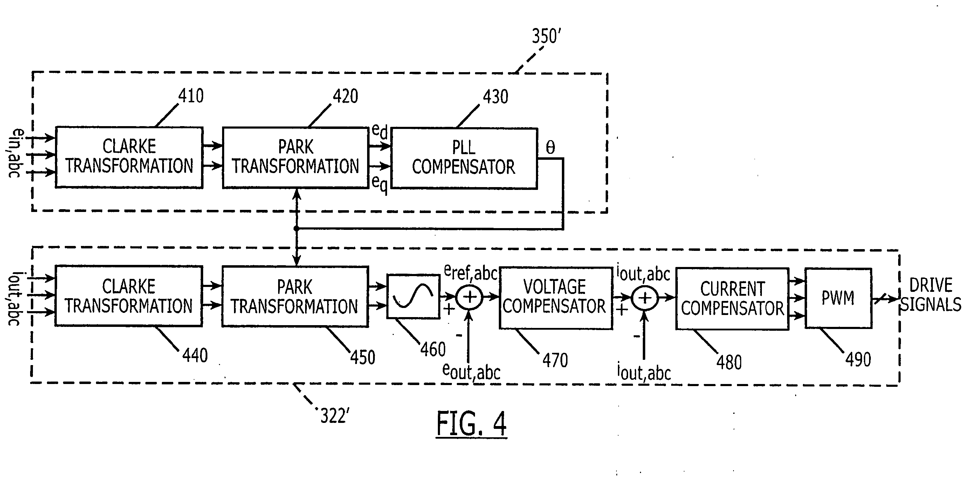

Referring to FIG. 4, a d-q domain angle estimator 350' may include a Clarke transformation unit 410 that converts sample values *e_{in, abc},* samples of the AC source voltages *eᵢₙₐ, e_{inb}, e_{inc}* of FIG. 3. to voltage values *e_{α},e_{β}.* The converted voltage values *e_{α},e_{β}* are provided to a d-q domain phase locked loop (PLL) that generates angle estimates *θ*. In particular, the PLL includes a Park transformation unit 420 that produces d and q component values *e_{d}, e_{q}* from the values *e_{α}, e_{β},* responsive to the angle estimates *θ*, and provides the d-q domain values *e_{d}, e_{q}* to a PLL compensator 430 that generates the angle estimates *θ*. It will be appreciated that the PLL compensator 430 may take a variety of different forms depending on the performance characteristics desired.

A d-q domain controller 322' includes a Clarke transformation unit 440 that, responsive to output current samples *i_{out, abc},* produces converted current values *i_{α}, i_{β}.* The angle estimates *θ* produced by the angle estimator 350' are provided to a Park transformation unit 450, which transforms the converted current values *i_{α}, i_{β}* to d-q domain values *i_{d}, i_{q}.* The d-q domain current values *i_{d}, i_{q}* are fed to an AC output voltage waveform reference signal generator unit 460. The AC output voltage reference signal generator unit 460 responsively generates an AC output voltage reference signal *e_{ref,abc}* that is used as a reference signal input for an output voltage control loop. In particular, the AC output voltage reference signal *e_{ref,abc}* (e.g., reference sinusoidal signals for each phase) is compared with an output voltage signal *e_{out,abc}* (e.g., sample signals corresponding to output phase voltages) to generate an error signal that is applied to a voltage compensator unit 470. The voltage compensator circuit 470 responsively generates an output current reference signal *i_{out,abc},* which is compared with the sensed output current *i_{ref,abc}* to provide a current error signal that is applied to a current compensator 480. The current compensator 480 responsively drives a PWM unit 490 that generates drive signals for the inverter bridge transistors. It will be understood that, in further embodiments of the present invention, d-q based techniques for generating phase information along the lines discussed above may be used in systems without an inner current loop as shown in FIG. 4 and in applications (e.g., open loop) with neither voltage nor current loops.

It will be appreciated that the phase estimator 350' and controller 322' may be implemented, wholly or in part, using a general purpose computing device, such as a microcontroller, microprocessor, digital signal processor (DSP) or the like. Embodiments of the present invention also include computer program products including computer program code configured to implement the operations of FIG. 4 in a computing device. It will be further appreciated that all or some of the functions illustrated in FIG. 4 may generally implemented using any of a variety of different analog and/or digital circuitry.

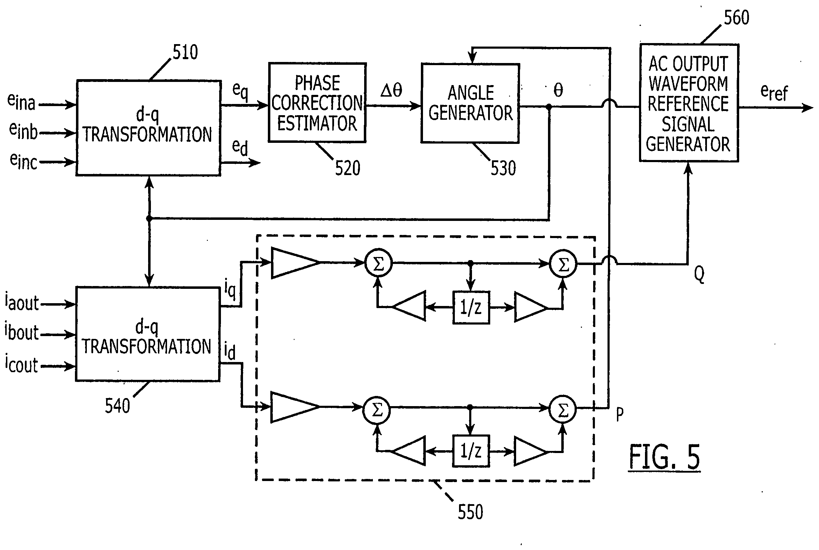

FIG. 5 illustrates an exemplary implementation of the functions shown in FIG. 4 according to further embodiments of the present invention. A PLL includes a first d-q transformation unit 510, i.e., a unit that provides Clarke and Park transformations, produces q (quadrature) and d (direct) component values *e_{q}, e_{d}* from AC voltage samples *eᵢₙₐ, e_{inb}, e_{inc}.* The q component values *e_{q}* are provided to a phase correction estimator unit 520, which responsively generates phase correction values *Δθ*. The phase correction values *Δθ* are provided to an angle generator 530, which generates phase-corrected angle values *θ* responsive to the correction value *Δθ* and real power correction values P generated by a proportional-derivative (PD) compensator 550. In particular, the phase correction values *Δθ* represent a correction to bring the phase-corrected angle values *θ*, which may be used as an angular reference for driving an inverter, in sync with the AC waveform from which the AC voltage samples *eᵢₙₐ, e_{inb}, e_{inc}* are generated. The real power correction values P may act to modify (shift) the angle values *θ* to provide a desired power transfer by the inverter, e.g., for purposes of load sharing along lines similar to techniques described in the aforementioned U.S. Patent Nos. 5,745,356 and 6,549,440.

The phase-corrected angle values *θ* are provided to an AC output waveform reference signal generator unit 560, which generates an AC output voltage reference signal *e_{ref}* (e.g*.,* a series of values representing a desired output voltage waveform) responsive to the phase-corrected inverter angle values *θ* and reactive power correction values Q generated by the PD compensator 550. The reactive power correction values Q may be used to modify the amplitude of the AC output voltage reference signal *e_{ref}* for power flow control purposes (e.g., power sharing), along lines similar to those described in the above-referenced U.S. Patent Nos. 5,745,356 and 6,549,440. The PD compensator 550 generates the real and reactive power correction values P, Q responsive to d and q current components *i_{q}, d_{q}* generated from output current samples *iₐₒᵤₜ, i_{bout}, i_{cout}* by a second d-q transformation unit 540 responsive to the phase-corrected inverter angle values *θ*. The AC output voltage reference signal *e_{ref}* may be used for AC output control of an inverter along lines discussed above with reference to FIG. 4. When the AC source from which the AC voltage samples *eᵢₙₐ, e_{inb}, e_{inc}* are generated fails, the PLL can be opened and the angle generator 530 may continue to generate angle values *θ* to support generation of the AC output voltage reference signal *e_{ref},* e.g., by maintaining the phase and frequency at which the angle values *θ* are being generated at the time the AC source fails.

It will be appreciated that the circuitry shown in FIG. 5 may be implemented, wholly or in part, using a general purpose computing device, such as a microcontroller, microprocessor, digital signal processor (DSP) or the like. Embodiments of the present invention also include computer program products including computer program code configured to implement the operations of FIG. 5 in a computing device. It will be further appreciated that all or some of the functions illustrated in FIG. 5 may generally implemented using any of a variety of different analog and/or digital circuitry.

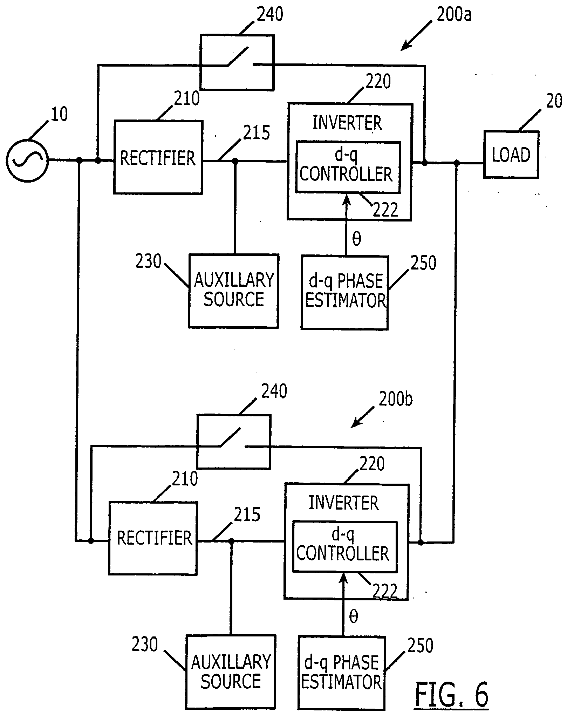

According to further embodiments of the present invention, phase estimation and control along the lines described above may be provided in a UPS to provide advantageous performance in paralleled applications. FIG. 6 illustrates first and second UPSs 200a, 200b, which include components as described above with reference to FIG. 2. Inputs of the UPSs 200a, 200b are connected in parallel to a common AC source 10, while outputs of the UPSs 200a, 200b are connected in parallel to a load 20. As noted above, in such paralleled applications, it is generally desirable that the paralleled UPSs provide a predetermined load sharing, for example, that the UPSs 200a, 200b provide substantially the same amount of power to the load 20. As further noted above, inverter control along lines discussed above with reference to FIGs. 2-5 may provide improved load sharing in such paralleled applications.

For example, such techniques may be particularly effective in paralleled applications in which the rectifiers 210 of the UPSs 200a, 200b are diode bridge rectifiers, e.g., rectifiers having the structure of the rectifier 310 of FIG. 3. The DC voltage produced by such a rectifier is typically constrained by the AC source 10, as the rectifier typically does not have the ability to boost the DC voltage. Under low input voltage conditions, the inverters 220 may produce an AC output waveform that is "clipped" or "flat-topped" due to low DC input voltage to the inverters 220. Some inverter output voltage control loops that derive information about the AC source using a conventional zero crossing PLL or other relatively low bandwidth techniques may have difficulty in achieving desirable load sharing among the UPSs under such distorted output waveform conditions. UPSs using inverter control techniques according to some embodiments of the present invention, however, may provide improved load sharing performance under such conditions. For example, using a control architecture as shown in FIG. 4, the sampling for computation of angle estimates *θ* and values of AC output voltage reference signal *e_{ref,abc}* input into the output voltage control loop may occur at rates (e.g., 2.5 kHz or more) substantially greater than the fundamental frequency of the source AC voltage (e.g., 60 Hz), which can provide improved transient performance. As an added benefit, sampling and computations for phase determination and output control may be performed at a common rate, which may simplify controller design.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A method of operating a power supply apparatus (100), the method comprising:
obtaining a value of an AC reference waveform (101) being a voltage waveform of an AC source (10) to which an AC output (102) of the power supply apparatus (100) is to be synchronized;
converting the value to a d-q reference frame value;
generating a phase estimate (Θ) responsive to the d-q reference frame value;
obtaining an output current value (i_{out,abc}) for a current at the AC output (102);
converting the output current value (i_{out,abc}) to a d-q reference frame current value (i_{q}, i_{d}) responsive to the phase estimate (Θ);
obtaining respective phase voltage signals (e_{out,abc}) corresponding to AC voltages of respective phases at the AC output (102);
generating respective AC output voltage waveform reference signals (e_{ref,abc}) corresponding to respective ones of the phases responsive to the d-q reference frame current value (i_{q}, i_{d});
comparing the AC output voltage waveform reference signals (e_{ref,abc}) to the phase voltage signals (e_{out,abc}); and
controlling the current at the AC output (102) responsive to the comparison of the AC output voltage waveform reference signals (e_{ref,abc}) and the phase voltage signals (e_{out,abc}).

2. The method of claim 1, wherein controlling the current at the AC output (102) responsive to the comparison of the AC output voltage waveform reference signals (e_{ref,abc}) and the phase voltage signals (e_{out,abc}) comprises:
generating an output current reference signal (i_{out,abc}) responsive to the comparison of the AC output voltage waveform reference signals (e_{ref,abc}) and the phase voltage signals (e_{out,abc}); and
controlling the current at the AC output (102) responsive to a comparison of the output current reference signal (i_{out,abc}) and the output current value (i_{ref,abc}).

3. The method of claim 1:
wherein generating a phase estimate (Θ) responsive to the d-q reference frame value comprises:
generating a phase correction value (Δθ) responsive to a quadrature component of the d-q reference frame value;
generating a real power correction value (P) and a reactive power correction value (Q) responsive to the d-q reference frame current value (i_{q}, i_{d}); and
generating the phase estimate (Θ) responsive to the phase correction value (Δθ) and the real power correction value (P); and
wherein generating respective AC output voltage waveform reference signals (e_{ref,abc}) corresponding to respective ones of the phases responsive to the d-q reference frame current value (i_{q}, i_{d}) comprises generating the AC output voltage waveform reference (e_{ref,abc}) signals responsive to the phase estimate (Θ) and the reactive power correction value (Q).

4. The method of Claim 1:
wherein generating the phase estimate (Θ) responsive to the d-q reference frame value comprises generating an angle estimate responsive to the d-q reference frame value; and
wherein converting the output current value (i_{out,abc}) to a d-q reference frame current value (i_{q}, i_{d}) responsive to the phase estimate (Θ) comprises converting the output current value (i_{out,abc}) to the d-q reference frame current value (i_{q}, i_{d}) responsive to the angle estimate.

5. The method of Claim 1:
wherein obtaining the value of an AC reference waveform (101) comprises obtaining a first value of the AC reference waveform ;
wherein converting the value to a d-q reference frame value comprises converting the first value of the AC reference waveform to a first d-q component value;
wherein generating the phase estimate (Θ) responsive to the d-q reference frame value comprises generating a first phase estimate responsive to a comparison of the first d-q component value to a reference d-q component value;
wherein obtaining the value of an AC reference waveform (101) further comprises obtaining a second value of the AC reference waveform
wherein converting the value to a d-q reference frame value further comprises converting the second value of the AC reference waveform to a second d-q component value according to the first phase estimate; and
wherein generating the phase estimate (Θ) responsive to the d-q reference frame value further comprises generating a second phase estimate responsive to a comparison of the second d-q component value to the reference d-q component value.

6. The method of Claim 3, wherein the first and second d-q component values comprise respective first and second quadrature component values and wherein the reference d-q component value comprises a reference quadrature component value.

7. The method of Claim 1, wherein controlling the current at the AC output (102) responsive to the comparison of the AC output voltage waveform reference signals (e_{ref,abc}) and the phase voltage signals (e_{out,abc}) comprises controlling an output inverter of an uninterruptible power supply (UPS).

8. The method of Claim 1, further comprising generating a DC voltage from the AC source (10) using a passive rectifier, and wherein controlling the current at the AC output (102) responsive to the comparison of the AC output voltage waveform reference signals (eref,abc) and the phase voltage signals (eout,abc) comprises generating the AC output (102) from the DC voltage responsive to the output current of the power supply apparatus (100) and the phase estimate (Θ).

9. The method of Claim 1, wherein generating the phase estimate (Θ) responsive to the d-q reference frame value comprises generating estimates of the phase of the AC reference waveform at a rate substantially greater than a fundamental frequency of the AC reference waveform.

10. A UPS configured to perform the method of Claim 1.

11. A UPS according to claim 10 and at least one further UPS, the plurality of UPSs having their AC outputs (102) connected in parallel to a load and being configured to perform the method of Claim 1.

12. A computer program product comprising computer program code embodied in a storage medium, the computer program code comprising program code configured to perform the method of Claim 1.

## Patentansprüche

1. Verfahren zum Betreiben einer Stromversorgungsvorrichtung (100), wobei das Verfahren umfasst:
Erhalten eines Werts einer Wechselstromreferenzwellenform (101), bei der es sich um eine Spannungswellenform eine Wechselstromquelle (10) handelt, mit der ein Wechselstromausgang (102) der Stromversorgungsvorrichtung (100) synchronisiert werden soll;
Umwandeln des Werts in einen d/q-Referenzrahmenwert;
Erzeugen einer Phasenschätzung (Θ) als Reaktion auf den d/q-Referenzrahmenwert;
Erhalten eines Ausgangsstromwerts (i_{out,abc}) für einen Strom am Wechselstromausgang (102);
Umwandeln des Ausgangsstromwerts (i_{out,abc}) in einen d/q-Referenzrahmenstromwert (i_{q}, i_{d}) als Reaktion auf die Phasenschätzung (θ);
Erhalten jeweiliger Phasenspannungssignale (e_{out,abc}), die den Wechselspannungen jeweiliger Phasen am Wechselstromausgang (102) entsprechen;
Erzeugen jeweiliger Wechselstrom-Ausgangsspannungswellenform-Referenzsignale (e_{ref,abc}), die den jeweiligen der Phasen entsprechen, als Reaktion auf den d/q-Referenzrahmenstromwert (i_{q}, i_{d});
Vergleichen der Wechselstrom-Ausgangsspannungswellenform-Referenzsignale (e_{ref,abc}) mit den Phasenspannungssignalen (e_{out,abc}); und
und Steuern des Stroms am Wechselstromausgang (102) als Reaktion auf den Vergleich der Wechselstrom-Ausgangsspannungswellenform-Referenzsignale (e_{ref,abc}) und der Phasenspannungssignale (e_{out,abc}).

2. Verfahren nach Anspruch 1, wobei das Steuern des Stroms am Wechselstromausgang (102) als Reaktion auf den Vergleich der Wechselstrom-Ausgangsspannungswellenform-Referenzsignale (e_{ref,abc}) und der Phasenspannungssignale (e_{out,abc}) umfasst:
Erzeugen eines Ausgangsstromreferenzsignals (i_{out,abc}) als Reaktion auf den Vergleich der Wechselstrom-Ausgangsspannungswellenform-Referenzsignale (e_{ref,abc}) und der Phasenspannungssignale (e_{out,abc}); und
und Steuern des Stroms am Wechselstromausgang (102) als Reaktion auf einen Vergleich des Ausgangsstromreferenzsignals (i_{out,abc}) und des Ausgangsstromwerts (i_{ref,abc}).

3. Verfahren nach Anspruch 1:
wobei das Erzeugen einer Phasenschätzung (θ) als Reaktion auf den d/q-Referenzrahmenwert umfasst:
Erzeugen eines Phasenkorrekturwerts (Δθ) als Reaktion auf eine Quadraturkomponente des d/q-Referenzrahmenwerts;
Erzeugen eines Wirkleistungskorrekturwerts (P) und eines Blindleistungskorrekturwerts (Q) als Reaktion auf den d/q-Referenzrahmenstromwert (i_{q}, i_{d}); und
Erzeugen der Phasenschätzung (θ) als Reaktion auf den Phasenkorrekturwert (Δθ) und den Wirkleistungskorrekturwert (P); und
wobei das Erzeugen der jeweiligen Wechselstrom-Ausgangsspannungswellenform-Referenzsignale (e_{ref,abc}), die jeweiligen der Phasen entsprechen, als Reaktion auf den d/q-Referenzstromwert (i_{q}, i_{d}) ein Erzeugen der Wechselstrom-Ausgangsspannungswellenform-Referenzsignal (e_{ref,abc}) als Reaktion auf die Phasenschätzung (θ) und den Wirkleistungskorrekturwert (Q) umfasst.

4. Verfahren nach Anspruch 1:
wobei das Erzeugen der Phasenschätzung (θ) als Reaktion auf den d/q-Bezugsrahmenwert das Erzeugen einer Winkelschätzung als Reaktion auf den d/q-Bezugsrahmenwert umfasst; und
wobei das Umwandeln des Ausgangsstromwerts (i_{out,abc}) in einen d/q-Referenzrahmenstromwert (i_{q}, i_{d}) als Reaktion auf die Phasenschätzung (θ) das Umwandeln des Ausgangsstromwerts (i_{out,abc}) in den d/q-Referenzrahmenstromwert (i_{q}, i_{d}) als Reaktion auf die Winkelschätzung umfasst.

5. Verfahren nach Anspruch I:
wobei das Erhalten des Werts einer Wechselstromreferenzwellenform (101) das Erhalten eines ersten Werts der Wechselstromreferenzwellenform umfasst;
wobei das Umwandeln des Werts in einen d/q-Referenzrahmenwert das Umwandeln des ersten Werts der Wechselstromreferenzwellenform in einen ersten d/q-Komponentenwert umfasst;
wobei das Erzeugen der Phasenschätzung (θ) als Reaktion auf den d/q-Referenzrahmenwert das Erzeugen einer ersten Phasenschätzung als Reaktion auf einen Vergleich des ersten d/q-Komponentenwerts mit einem Referenz-d/q-Komponentenwert umfasst;
wobei das Erhalten des Werts einer Wechselstromreferenzwellenform (101) ferner das Erhalten eines zweiten Werts der Wechselstromreferenzwellenform umfasst
wobei das Umwandeln des Werts in einen d/q-Referenzrahmenwert ferner das Umwandeln des zweiten Werts der Wechselstromreferenzwellenform in einen zweiten d/q-Komponentenwert gemäß der ersten Phasenschätzung umfasst; und
wobei das Erzeugen der Phasenschätzung (θ) als Reaktion auf den d/q-Referenzrahmenwert ferner das Erzeugen einer zweiten Phasenschätzung als Reaktion auf einen Vergleich des zweiten d/q-Komponentenwerts mit dem Referenz-d/q-Komponentenwert umfasst.

6. Verfahren nach Anspruch 3, wobei der erste und zweite d/q-Komponentenwert jeweilige erste und zweite Quadraturkomponentenwerte umfassen und wobei der Referenz-d/q-Komponentenwert einen Referenz-Quadraturkomponentenwert umfasst.

7. Verfahren nach Anspruch 1, wobei das Steuern des Stroms am Wechselstromausgang (102) als Reaktion auf den Vergleich der Wechselstrom-Ausgangsspannungswellenform-Referenzsignale (e_{ref,abc}) und der Phasenspannungssignale (e_{out,abc}) das Steuern eines Ausgangswechselrichters einer unterbrechungsfreien Stromversorgung (USV) umfasst.

8. Verfahren nach Anspruch 1, ferner umfassend das Erzeugen einer Gleichspannung aus der Wechselstromquelle (10) unter Verwendung eines passiven Gleichrichters, und wobei das Steuern des Stroms am Wechselstromausgang (102) als Reaktion auf den Vergleich der Wechselstrom-Ausgangsspannungswellenform-Referenzsignale (eref,abc) und der Phasenspannungssignale (eout,abc) das Erzeugen des Wechselstromausgangs (102) aus der Gleichspannung als Reaktion auf den Ausgangsstrom der Stromversorgungsvorrichtung (100) und die Phasenschätzung (θ) umfasst.

9. Verfahren nach Anspruch 1, wobei das Erzeugen der Phasenschätzung (θ) als Reaktion auf den d/q-Referenzrahmenwert das Erzeugen von Schätzungen der Phase der Wechselstromreferenzwellenform mit einer Geschwindigkeit umfasst, die im Wesentlichen größer als eine Grundfrequenz der Wechselstromreferenzwellenform ist.

10. USV, die eingerichtet ist, das Verfahren nach Anspruch 1 durchzuführen.

11. USV nach Anspruch 10 und mindestens eine weitere USV, wobei die Vielzahl von USVs mit ihren Wechselstromausgängen (102) parallel an eine Last angeschlossen und eingerichtet sind, das Verfahren nach Anspruch 1 durchzuführen.

12. Computerprogrammprodukt, umfassend in einem Speichermedium verkörperten Computerprogrammcode, wobei der Computerprogrammcode einen Programmcode umfasst, der eingerichtet ist, das Verfahren nach Anspruch 1 durchzuführen.

## Revendications

1. Procédé de fonctionnement d'un appareil d'alimentation électrique (100), le procédé comprenant :
l'obtention d'une valeur d'une forme d'onde de référence CA (101) étant une forme d'onde de tension d'une source CA (10) à laquelle une sortie CA (102) de l'appareil d'alimentation électrique (100) doit être synchronisée ;
la conversion de la valeur en une valeur de trame de référence d-q ;
la génération d'une estimation de phase (θ) en réponse à la valeur de trame de référence d-q ;
l'obtention d'une valeur de courant de sortie (i_{out,abc}) pour un courant au niveau de la sortie CA (102) ;
la conversion de la valeur de courant de sortie (i_{out,abc}) en une valeur de courant de trame de référence d-q (i_{q}, i_{d}) en réponse à l'estimation de phase (θ) ;
l'obtention de signaux de tension de phase respectifs (e_{out,abc}) correspondant à des tensions CA de phases respectives au niveau de la sortie CA (102) ;
la génération de signaux de référence de forme d'onde de tension de sortie CA respectifs (e_{ref,abc}) correspondant à des respectives parmi les phases en réponse à la valeur de courant de trame de référence d-q (i_{q}, i_{d}) ;
la comparaison des signaux de référence de forme d'onde de tension de sortie CA (e_{ref,abc}) aux signaux de tension de phase (e_{out,abc}) ; et
la commande du courant au niveau de la sortie CA (102) en réponse à la comparaison des signaux de référence de forme d'onde de tension de sortie CA (e_{ref,abc}) et des signaux de tension de phase (e_{out,abc}).

2. Procédé selon la revendication 1, dans lequel la commande du courant au niveau de la sortie CA (102) en réponse à la comparaison des signaux de référence de forme d'onde de tension de sortie CA (e_{ref,abc}) et des signaux de tension de phase (e_{out,abc}) comprend :
la génération d'un signal de référence de courant de sortie (i_{out,abc}) en réponse à la comparaison des signaux de référence de forme d'onde de tension de sortie CA (e_{ref,abc}) et des signaux de tension de phase (e_{out,abc}) ; et
la commande du courant au niveau de la sortie CA (102) en réponse à une comparaison du signal de référence de courant de sortie (i_{out,abc}) et de la valeur de courant de sortie (i_{ref,abc}).

3. Procédé selon la revendication 1 :
dans lequel la génération d'une estimation de phase (θ) en réponse à la valeur de trame de référence d-q comprend :
la génération d'une valeur de correction de phase (Δθ) en réponse à une composante en quadrature de la valeur de trame de référence d-q ;
la génération d'une valeur de correction de puissance réelle (P) et d'une valeur de correction de puissance réactive (Q) en réponse à la valeur de courant de trame de référence d-q (i_{q}, i_{d}) ; et
la génération de l'estimation de phase (θ) en réponse à la valeur de correction de phase (Δθ) et à la valeur de correction de puissance réelle (P) ; et
dans lequel la génération de signaux de référence de forme d'onde de tension de sortie CA respectifs (e_{ref',abc}) correspondant à des respectives parmi les phases en réponse à la valeur de courant de trame de référence d-q (i_{q}, i_{d}) comprend la génération de signaux de référence de forme d'onde de tension de sortie CA (e_{ref,abc}) en réponse à l'estimation de phase (θ) et à la valeur de correction de puissance réactive (Q).

4. Procédé selon la revendication 1 :
dans lequel la génération de l'estimation de phase (θ) en réponse à la valeur de trame de référence d-q comprend la génération d'une estimation d'angle en réponse à la valeur de trame de référence d-q ; et
dans lequel la conversion de la valeur de courant de sortie (i_{out,abc}) en une valeur de courant de trame de référence d-q (i_{q}, i_{d}) en réponse à l'estimation de phase (θ) comprend la conversion de la valeur de courant de sortie (i_{out,abc}) en la valeur de courant de trame de référence d-q (i_{q}, i_{d}) en réponse à l'estimation d'angle.

5. Procédé selon la revendication 1 :
dans lequel l'obtention de la valeur d'une forme d'onde de référence CA (101) comprend l'obtention d'une première valeur de la forme d'onde de référence CA ;
dans lequel la conversion de la valeur en une valeur de trame de référence d-q comprend la conversion de la première valeur de la forme d'onde de référence CA en une première valeur de composante d-q ;
dans lequel la génération de l'estimation de phase (θ) en réponse à la valeur de trame de référence d-q comprend la génération d'une première estimation de phase en réponse à une comparaison de la première valeur de composante d-q à une valeur de composante d-q de référence ;
dans lequel l'obtention de la valeur d'une forme d'onde de référence CA (101) comprend en outre l'obtention d'une deuxième valeur de la forme d'onde de référence CA
dans lequel la conversion de la valeur en une valeur de trame de référence d-q comprend en outre la conversion de la deuxième valeur de la forme d'onde de référence CA en une deuxième valeur de composante d-q selon la première estimation de phase ; et
dans lequel la génération de l'estimation de phase (θ) en réponse à la valeur de trame de référence d-q comprend en outre la génération d'une deuxième estimation de phase en réponse à une comparaison de la deuxième valeur de composante d-q à la valeur de composante d-q de référence.

6. Procédé selon la revendication 3, dans lequel les première et deuxième valeurs de composante d-q comprennent des première et deuxième valeurs de composante en quadrature respectives et dans lequel la valeur de composante d-q de référence comprend une valeur de composante en quadrature de référence.

7. Procédé selon la revendication 1, dans lequel la commande du courant au niveau de la sortie CA (102) en réponse à la comparaison des signaux de référence de forme d'onde de tension de sortie CA (e_{ref,abc}) et des signaux de tension de phase (e_{out,abc}) comprend la commande d'un onduleur de sortie d'un système d'alimentation sans coupure (UPS).

8. Procédé selon la revendication 1, comprenant en outre la génération d'une tension CC à partir de la source CA (10) en utilisant un redresseur passif, et dans lequel la commande du courant au niveau de la sortie CA (102) en réponse à la comparaison des signaux de référence de forme d'onde de tension de sortie CA (e_{ref,abc}) et des signaux de tension de phase (eout,abc) comprend la génération de la sortie CA (102) à partir de la tension CC en réponse au courant de sortie de l'appareil d'alimentation électrique (100) et de l'estimation de phase (θ).

9. Procédé selon la revendication 1, dans lequel la génération de l'estimation de phase (θ) en réponse à la valeur de trame de référence d-q comprend la génération d'estimations de la phase de la forme d'onde de référence CA à une cadence essentiellement supérieure à une fréquence fondamentale de la forme d'onde de référence CA.

10. Système d'alimentation sans coupure configuré pour mettre en œuvre le procédé selon la revendication 1.

11. Système d'alimentation sans coupure selon la revendication 10 et au moins un autre système d'alimentation sans coupure, la pluralité des systèmes d'alimentation sans coupure ayant leurs sorties CA (102) connectées en parallèle à une charge et étant configurés pour mettre en œuvre le procédé selon la revendication 1.

12. Produit programme informatique comprenant un code de programme informatique incorporé dans un support de stockage, le code de programme informatique comprenant un code de programme configuré pour mettre en œuvre le procédé selon la revendication 1.
